# EUROPÄISCHE PATENTSCHRIFT

(11) **EP 3 765 813 B1**
(45) Veröffentlichungstag und Bekanntmachung des Hinweises auf die Patenterteilung: **16.02.2022**
(21) Anmeldenummer: 19727860.9
(22) Anmeldetag: 15.05.2019
(51) Int. Cl.: G01B 5/207

(54) **SIMULTANES MESSEN BEI MEHRSPINDEL-WERKZEUGMASCHINEN**
SIMULTANEOUS MEASURING IN MULTI-SPINDLE MACHINE TOOLS
MESURE SIMULTANÉE POUR MACHINES-OUTILS MULTIBROCHE

(30) Priorität: 01.06.2018 EP 18175555
(43) Veröffentlichungstag der Anmeldung: 20.01.2021
(73) Patentinhaber: Siemens Aktiengesellschaft, 80333 München (DE)
(72) Erfinder: KUNZE, Patrick, 09126 Chemnitz (DE); KRETSCHMAR, Holger, 09128 Chemnitz (DE)
(86) Internationale Anmeldenummer: PCT/EP2019/062455
(87) Internationale Veröffentlichungsnummer: WO 2019/228806

(56) Entgegenhaltungen:
- EP-A1- 0 326 625
- WO-A1-2018/033704

## Beschreibung

Die vorliegende Erfindung geht aus von einem Betriebsverfahren für eine Werkzeugmaschine, bei der in mehreren Werkstückaufnahmen der Werkzeugmaschine jeweils ein Werkstück angeordnet ist und in mehreren Spindeln der Werkzeugmaschine jeweils ein Messtaster angeordnet ist,
- wobei die Spindeln relativ zu den Werkstücken wiederholt in einer jeweiligen gemeinsamen und gleichartigen Verfahrbewegung gemeinsam und gleichartig verfahren werden, bis eine jeweilige Abbruchbedingung für die jeweilige Verfahrbewegung erreicht ist,
- wobei während der jeweiligen gemeinsamen und gleichartigen Verfahrbewegung für die Messtaster jeweils eine Lage des jeweiligen Messtasters relativ zum jeweiligen Werkstück erfasst wird, bei der der jeweilige Messtaster das jeweilige Werkstück berührt, so dass anhand der für das jeweilige Werkstück erfassten Lagen des jeweiligen Messtasters geometrische Aussagen über das jeweilige Werkstück ableitbar sind.

Die vorliegende Erfindung geht weiterhin aus von einem Computerprogramm, das Maschinencode umfasst, der von einer Steuereinrichtung für eine Werkzeugmaschine abarbeitbar ist, wobei die Abarbeitung des Maschinencodes durch die Steuereinrichtung bewirkt, dass die Steuereinrichtung die Werkzeugmaschine gemäß einem derartigen Betriebsverfahren steuert.

Die vorliegende Erfindung geht weiterhin aus von einer Steuereinrichtung für eine Werkzeugmaschine, wobei die Steuereinrichtung mit einem derartigen Computerprogramm programmiert ist, so dass die Steuereinrichtung die Werkzeugmaschine gemäß einem derartigen Betriebsverfahren steuert.

Die vorliegende Erfindung geht weiterhin aus von einer Werkzeugmaschine,
- wobei die Werkzeugmaschine mehrere Werkstückaufnahmen zur Aufnahme je eines Werkstücks aufweist,
- wobei die Werkzeugmaschine mehrere Spindeln zur Aufnahme je eines Messtasters aufweist,
- wobei die Werkzeugmaschine eine derartige Steuereinrichtung aufweist.

Die oben genannten Gegenstände sind aus der EP 0 326 625 A1 bekannt.

Bei "normalen" Werkzeugmaschinen ist in der Regel eine einzige Werkstückaufnahme vorhanden und ist weiterhin meist auch nur eine einzige Spindel vorhanden. Wenn ein in der Werkstückaufnahme befindliches Werkstück vermessen werden soll, wird in der Spindel der Werkzeugmaschine ein Messtaster angeordnet. Danach wird der Messtaster sequenziell nacheinander mittels einer jeweiligen Verfahrbewegung verfahren, bis der Messtaster das Werkstück berührt oder den Kontakt mit dem Werkstück verliert. Die zu diesem Zeitpunkt gegebene Lage des Messtasters relativ zum Werkstück wird erfasst. Anhand der insgesamt für das Werkstück erfassten Lagen des Messtasters sind sodann geometrische Aussagen über das Werkstück ableitbar, beispielsweise dessen Abmessungen oder dessen Kontur oder die Anordnung und Ausgestaltung von einzelnen Elementen der Kontur.

Es sind weiterhin auch Werkzeugmaschinen bekannt, die mehrere Werkstückaufnahmen und mehrere Spindeln aufweisen. Diese Werkzeugmaschinen weisen den Vorteil auf, dass in jeder Werkstückaufnahme jeweils ein eigenes Werkstück angeordnet werden kann und mittels einer für alle Spindeln einheitlichen Verfahrbewegung die gleichzeitige einheitliche Bearbeitung mehrerer Werkstücke möglich ist.

Auch bei derartigen Werkzeugmaschinen ist es möglich, in den Werkstückaufnahmen befindliche Werkstücke zu vermessen. Zu diesem Zweck wird in den Spindeln der Werkzeugmaschine jeweils ein Messtaster angeordnet.

Die allgemeine Praxis besteht darin, jeweils nur einen der Messtaster aktiv zu schalten, mittels dieses einen Messtasters eines der Werkstücke vollständig - also mittels mehrerer Verfahrbewegungen - zu vermessen, sodann einen anderen Messtaster aktiv zu schalten und die Verfahrbewegungen zu wiederholen und so ein anderes Werkstück zu vermessen. Es werden also nacheinander verschiedene Verfahrbewegungen ausgeführt, während jeweils ein und derselbe Messtaster aktiv geschaltet ist. Erst wenn für diesen einen Messtaster alle Messergebnisse vorliegen, wird der nächste Messtaster aktiv geschaltet. Diese Vorgehensweise ist sehr zeitaufwendig.

Aus der WO 2018/033 704 A1 ist ebenfalls bekannt, jeweils nur einen der Messtaster aktiv zu schalten. Im Gegensatz zur allgemeinen Praxis wird bei der WO 2018/033 704 A1 jedoch nacheinander mehrfach dieselbe Verfahrbewegung ausgeführt, wobei jeweils ein anderer der Messtaster aktiv geschaltet ist. Erst wenn für diese eine Verfahrbewegung die Messergebnisse aller Messtaster vorliegen, wird zur nächsten Verfahrbewegung übergegangen. Diese Vorgehensweise stellt bereits einen Fortschritt dar, benötigt aber immer noch viel Zeit.

Die Aufgabe der vorliegenden Erfindung besteht darin, Möglichkeiten zu schaffen, mittels derer auf einfache und zuverlässige und vor allem schnelle Art und Weise eine Vermessung mehrerer gleichartiger Werkstücke möglich ist und dennoch mit Sicherheit eine Beschädigung der Messtaster vermieden wird.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 4.

Erfindungsgemäß wird ein Betriebsverfahren der eingangs genannten Art dadurch ausgestaltet,
- dass die Messtaster während der jeweiligen gemeinsamen und gleichartigen Verfahrbewegung relativ zu ihrer jeweiligen Spindel in einer Ruhelage gehalten werden, wenn und solange der jeweilige Messtaster das jeweilige Werkstück noch nicht berührt, und ab dem Berühren des jeweiligen Werkstücks eine jeweilige Auslenkung des jeweiligen Messtasters aus einer jeweiligen Ruhelage erfasst wird und
- dass die Abbruchbedingung erfüllt ist, sobald während der jeweiligen gemeinsamen und gleichartigen Verfahrbewegung die Auslenkung mindestens eines der Messtaster eine jeweilige Maximalauslenkung erreicht.

Es kann somit während einer einzelnen jeweiligen Verfahrbewegung zwar einerseits für alle Messtaster simultan bzw. nahezu simultan die jeweilige Lage des jeweiligen Messtasters relativ zum jeweiligen Werkstück erfasst werden. Damit ist es nicht mehr erforderlich, ein und dieselbe Verfahrbewegung mehrmals nacheinander - nämlich für jeden Messtaster einmal - zu wiederholen. Durch die Erfassung der Lage des jeweiligen Messtasters für alle Messtaster während einer gemeinsamen Verfahrbewegung können somit die zweite, die dritte usw. Ausführung der Verfahrbewegung eingespart werden. Es ist eine schnelle, effiziente Vermessung mehrerer Werkstücke möglich. Dadurch unterbleibt zwar unter Umständen für mindestens einen der Messtaster eine Datenerfassung. Zum einen liegt dann aber sowieso mit hoher Wahrscheinlichkeit bereits ein Fehler in der Bearbeitung desjenigen Werkstücks vor, für dessen zugehörigen Messtaster zu dem Zeitpunkt, zu dem die Maximalauslenkung erreicht wird, noch keine Lage erfasst ist. Vor allem aber kann dadurch eine Beschädigung desjenigen Messtasters, dessen Auslenkung seine Maximalauslenkung erreicht, vermieden werden.

Vorzugsweise ist vorgesehen, dass die Abbruchbedingung auch dann erfüllt ist, sobald während der jeweiligen gemeinsamen und gleichartigen Verfahrbewegung für alle Messtaster jeweils eine Lage erfasst wurde. Dadurch kann die Verfahrbewegung sofort beendet werden, sowie für die jeweilige Verfahrbewegung alle Messergebnisse vorliegen.

Vorzugsweise wird weiterhin immer dann, wenn während der jeweiligen gemeinsamen und gleichartigen Verfahrbewegung die Auslenkung mindestens eines der Messtaster eine jeweilige Maximalauslenkung erreicht, eine Meldung an eine Bedienperson der Werkzeugmaschine ausgegeben. Die Meldung kann sofort oder zu einem späteren Zeitpunkt ausgegeben werden. In beiden Fällen wird die Bedienperson darauf hingewiesen, dass und gegebenenfalls auch welche Messungen fehlgeschlagen sind.

Es ist prinzipiell möglich, für alle Messtaster die Auslenkung zu erfassen und mit der jeweiligen Maximalauslenkung zu vergleichen. In den meisten Fällen sind die Messtaster jedoch gleichartig ausgebildet, so dass sie insbesondere auch die gleiche Maximalauslenkung aufweisen. In diesem Fall wird vorzugsweise nur die Auslenkung desjenigen Messtasters, dessen Lage während der jeweiligen gemeinsamen und gleichartigen Verfahrbewegung zuerst erfasst wird, mit der jeweiligen Maximalauslenkung verglichen. Durch diese Ausgestaltung kann der Rechenaufwand der Steuereinrichtung, welche die Verfahrbewegungen steuert, gering gehalten werden.

Die Aufgabe wird weiterhin durch ein Computerprogramm mit den Merkmalen des Anspruchs 5 gelöst. Erfindungsgemäß bewirkt die Abarbeitung des Maschinencodes durch die Steuereinrichtung, dass die Steuereinrichtung die Werkzeugmaschine gemäß einem erfindungsgemäßen Betriebsverfahren steuert.

Die Aufgabe wird weiterhin durch eine Steuereinrichtung mit den Merkmalen des Anspruchs 6 gelöst. Erfindungsgemäß ist die Steuereinrichtung mit einem erfindungsgemäßen Computerprogramm programmiert, so dass die Steuereinrichtung die Werkzeugmaschine gemäß einem erfindungsgemäßen Betriebsverfahren steuert.

Die Aufgabe wird weiterhin durch eine Werkzeugmaschine mit den Merkmalen des Anspruchs 7 gelöst. Erfindungsgemäß ist bei einer Werkzeugmaschine der eingangs genannten Art die Steuereinrichtung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine und ihre Komponenten,
- FIG 2: ein Ablaufdiagramm,
- FIG 3: Werkstücke und Messtaster zu einem bestimmten Zeitpunkt,
- FIG 4: die Werkstücke und Messtaster von FIG 3 zu einem späteren Zeitpunkt und
- FIG 5: ein Ablaufdiagramm.

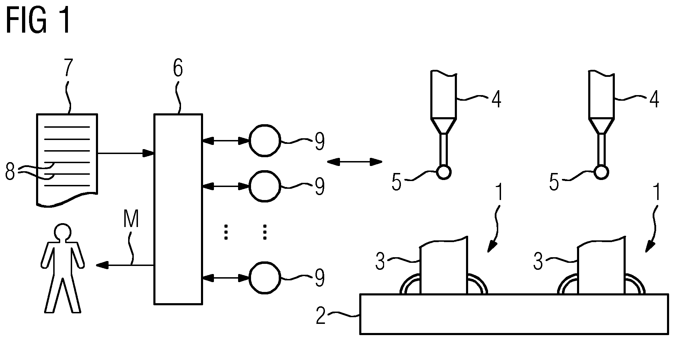

Gemäß FIG 1 weist eine Werkzeugmaschine mehrere Werkstückaufnahmen 1 auf. Die Werkstückaufnahmen 1 können beispielsweise auf einem den Werkstückaufnahmen 1 gemeinsamen Werkstücktisch 2 angeordnet sein. In den Werkstückaufnahmen 1 kann jeweils ein Werkstück 3 angeordnet sein. Die Werkzeugmaschine weist weiterhin mehrere Spindeln 4 auf. In den Spindeln 4 kann jeweils ein Messtaster 5 angeordnet sein. In der Regel ist jedem Werkstück 3 genau ein Messtaster 5 zugeordnet. Es besteht also eine 1:1-Beziehung zwischen jeweils einem Werkstück 3 und dem jeweils zugeordneten Messtaster 5.

Die Werkzeugmaschine weist weiterhin eine Steuereinrichtung 6 auf. Die Steuereinrichtung 6 ist mit einem Computerprogramm 7 programmiert. Das Computerprogramm 7 umfasst Maschinencode 8, der von der Steuereinrichtung 6 abarbeitbar ist. Die Abarbeitung des Maschinencodes 8 durch die Steuereinrichtung 6 bewirkt, dass die Steuereinrichtung 6 die Werkzeugmaschine gemäß einem Betriebsverfahren steuert, das nachstehend in Verbindung mit den weiteren FIG näher erläutert wird.

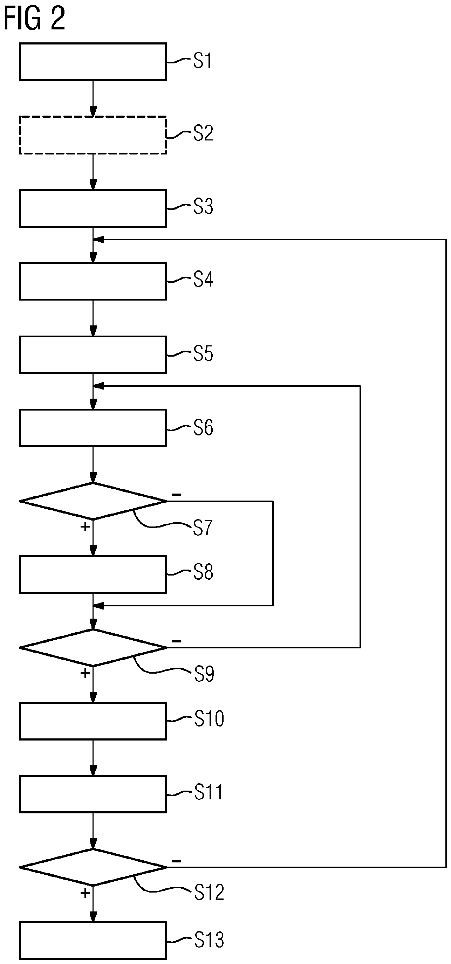

Die Werkzeugmaschine führt in der Regel an den Werkstücken 3 zunächst eine einheitliche Bearbeitung durch. Im Idealfall sind die Werkstücke 3 nach der Bearbeitung identisch. Während der Bearbeitung der Werkstücke 3 sind in den Spindeln 4 nicht die Messtaster 5 angeordnet, sondern Werkzeuge, beispielsweise Bohrer oder Fräser. Zur Bearbeitung der Werkstücke 3 steuert die Steuereinrichtung 6 gemäß FIG 2 in einem Schritt S1 in der Regel mehrere Achsen 9 an, mittels derer der Werkzeugtisch 2 bzw. allgemein die Werkstückaufnahmen 1 und die Spindeln 4 relativ zueinander lagegeregelt verfahren werden. Die Bearbeitung der Werkstücke 3 durch die Werkzeugmaschine ist Fachleuten allgemein bekannt und im Rahmen der vorliegenden Erfindung von untergeordneter Bedeutung. Sie wird daher nicht näher erläutert.

Sodann werden die Messtaster 5 in den Spindeln 4 angeordnet. Es ist möglich, dass diese Maßnahme von einer Bedienperson 10 der Werkzeugmaschine manuell durchgeführt wird. Alternativ kann sie in einem Schritt S2 von der Steuereinrichtung 6 durchgeführt werden. Weil die Ausführung des Schrittes S2 durch die Steuereinrichtung 6 nicht zwingend ist, ist der Schritt S2 in FIG 2 nur gestrichelt dargestellt. Mit der Anordnung der Messtaster 5 in den Spindeln 4 beginnt das erfindungsgemäße Verfahren.

Soweit erforderlich, erfolgt in einem Schritt S3 zunächst eine Kalibrierung der Messtaster 5. Diese Kalibrierung ist individuell für den jeweiligen Messtaster 5. Sie ist als solche nicht Gegenstand der vorliegenden Erfindung. Es ist jedoch erforderlich, dass für jeden Messtaster 5 aufgrund der Ansteuerung der Achsen 9 eindeutig und exakt die zugehörige Anordnung des jeweiligen Messtasters 5 in einem Maschinenkoordinatensystem ermittelt werden kann. Derartige Kalibrierungen sind Fachleuten bekannt. Sie müssen daher nicht näher erläutert werden.

Sodann selektiert die Steuereinrichtung 6 in einem Schritt S4 eine Verfahrbewegung. In einem Schritt S5 verfährt die Steuereinrichtung 6 die Spindeln 4 zu einer Anfangsposition der jeweiligen Verfahrbewegung. In einem Schritt S6 verfährt die Steuereinrichtung 6 die Spindeln 4 relativ zu den Werkstücken 3.

Die Verfahrbewegung ist für die Spindeln 4 gemeinsam und gleichartig. "Gemeinsam und gleichartig" bedeutet zunächst, dass die Anfangspositionen der Messtaster 5 im Maschinenkoordinatensystem zwar individuell verschieden sind, der geometrische Versatz von Messtaster 5 zu Messtaster 5 jedoch, so weit wie möglich, mit dem geometrischen Versatz der jeweils zugeordneten Werkstücke 3 korrespondiert. Wenn also beispielsweise auf dem Werkstücktisch 2 nebeneinander mit einem Abstand von jeweils 30 cm vier Werkstücke 3 angeordnet sind, so sind auch die Messtaster 5 jeweils um 30 cm gegeneinander versetzt nebeneinander angeordnet. "Gemeinsam und gleichartig" bedeutet weiterhin, dass die Positionen der Messtaster 5 im Maschinenkoordinatensystem zwar auch während des Verfahrens der Messtaster 5 relativ zu den Werkstücken 3 individuell verschieden sind, aber auch während des Verfahrens der geometrische Versatz von Messtaster 5 zu Messtaster 5, so weit wie möglich, mit dem geometrischen Versatz der jeweils zugeordneten Werkstücke 3 korrespondiert. Wenn also beispielsweise einer der Messtaster 5 in einer bestimmten Richtung um 5 cm verfahren wird, so werden auch die anderen Messtaster 5 in derselben Richtung um 5 cm verfahren. Verfahrbewegungen erfolgen also für alle Messtaster 5 in jeweils dieselbe Richtung und über dieselbe Strecke.

Während des Verfahrens der Messtaster 5 prüft die Steuereinrichtung 6 in einem Schritt S7, ob einer der Messtaster 5 das Werkstück 3, dem er zugeordnet ist, berührt. Wenn dies der Fall ist, erfasst und speichert die Steuereinrichtung 6 in einem Schritt S8 für diesen Messtaster 5 die Lage des jeweiligen Messtasters 5 relativ zum zugeordneten Werkstück 3. Die Lage wird in der Regel zumindest die translatorischen Koordinaten des Messtasters 5 relativ zum jeweils zugeordneten Werkstück 3 umfassen. Soweit erforderlich, kann die Lage aber - in der Regel zusätzlich - auch die Orientierung des Messtasters 5 relativ zum jeweils zugeordneten Werkstück 3 umfassen.

Der Begriff "erfassen" bedeutet in diesem Zusammenhang also nicht lediglich, dass die jeweilige Lage der Steuereinrichtung 6 kurzzeitig bekannt ist und danach wieder in Vergessenheit gerät. Es ist vielmehr erforderlich, dass die Lage so lange gespeichert bleibt, bis für alle Verfahrbewegungen die jeweilige Lage des jeweiligen Messtasters 5 erfasst ist und die Lagen ausgewertet sind.

In einem Schritt S9 prüft die Steuereinrichtung 6, ob sie während der jeweiligen gemeinsamen und gleichartigen Verfahrbewegung bereits für alle Messtaster 5 einen Kontakt mit dem Werkstück 3, dem der jeweilige Messtaster 5 zugeordnet ist, (also ein Berühren) oder dessen Verlust erfasst hat. Wenn dies nicht der Fall ist, geht die Steuereinrichtung 6 zum Schritt S6 zurück, setzt also die Verfahrbewegung fort. Wenn die Steuereinrichtung 6 hingegen bereits für alle Messtaster 5 einen Kontakt mit dem jeweiligen Werkstück 3 oder den Verlust des Kontakts erfasst hat, geht die Steuereinrichtung 6 zu einem Schritt S10 über.

Im Schritt S10 beendet die Steuereinrichtung 6 die jeweilige Verfahrbewegung. Soweit erforderlich, kann die Steuereinrichtung 6 weiterhin in einem Schritt S11 eine Bewegung der Messtaster 5 relativ zu den Werkstücken 3 veranlassen, so dass die Messtaster 5 die jeweils zugeordneten Werkstücke 3 nicht mehr kontaktieren. Beispielsweise kann die Steuereinrichtung 6 die Messtaster 5 im Schritt S11 in eine definierte Standardposition überführen. In manchen Ausgestaltungen der vorliegenden Erfindung kann der Schritt S11 aber auch anderweitig ausgestaltet sein oder unter Umständen sogar entfallen.

Sodann prüft die Steuereinrichtung 6 in einem Schritt S12, ob sie bereits alle Verfahrbewegungen ausgeführt hat. Wenn dies nicht der Fall ist, geht die Steuereinrichtung 6 zum Schritt S4 zurück. Sie selektiert bei der erneuten Ausführung des Schrittes S4 jedoch eine andere, bisher noch nicht ausgeführte Verfahrbewegung. Anderenfalls geht die Steuereinrichtung 6 zu einem Schritt S13 über. Im Schritt S13 kann sodann eine Auswertung der bei der wiederholten Ausführung des Schrittes S8 jeweils erfassten Lagen vornehmen. Im Rahmen dieser Auswertung können insbesondere anhand der für das jeweilige Werkstück 3 erfassten Lagen des jeweiligen Messtasters 5 geometrische Aussagen über das jeweilige Werkstück 3 abgeleitet werden. Der Schritt S13 ist in der Regel Bestandteil des erfindungsgemäßen Betriebsverfahrens. Er kann aber im Einzelfall auch durch eine andere Einrichtung als die Steuereinrichtung 6 ausgeführt werden.

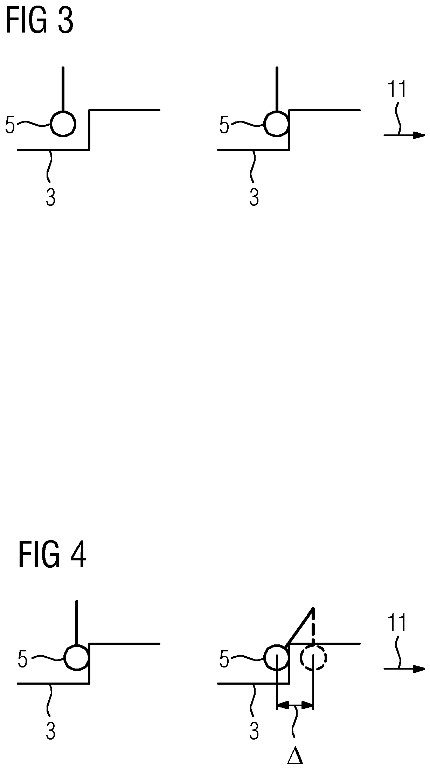

Im Rahmen der erfindungsgemäßen Vorgehensweise wird also im Rahmen ein und derselben Verfahrbewegung für jeden Messtaster 5 je einmal dessen Lage erfasst. Wenn beispielsweise entsprechend der Darstellung in FIG 3 eine Verfahrbewegung der Messtaster 5 relativ zu den Werkstücken 3 in die mit dem Pfeil 11 angegebene Richtung erfolgt, berührt in der in FIG 3 angegebenen Konstellation zuerst der rechts dargestellte Messtaster 5 das ihm zugeordnete Werkstück 3. bis zu diesem Zeitpunkt - also solange die Messtaster 5 die Werkstücke noch nicht berühren, werden die Messtaster 5 entsprechend der Darstellung in FIG 3 relativ zu ihrer jeweiligen Spindel 4 in einer jeweiligen Ruhelage gehalten.

Zum Zeitpunkt der Berührung wird die angegebene Lage des entsprechenden Messtasters 5 erfasst und gespeichert. Da zu diesem Zeitpunkt der in FIG 3 links dargestellte Messtaster 5 sein Werkstück 3 jedoch noch nicht berührt hat, wird die Verfahrbewegung fortgesetzt, bis auch dieser Messtaster 5 sein Werkstück 3 berührt. Der rechte Messtaster 5 wird während dieses Zeitraums - also zwar während der jeweiligen gemeinsamen und gleichartigen Verfahrbewegung, aber nach dem Berühren "seines" Werkstücks 3 - aus seiner Ruhelage (in FIG 4 gestrichelt dargestellt) um eine Auslenkung Δ ausgelenkt. Die Auslenkung Δ ist in der Regel nur geringfügig. Erst wenn auch der in den FIG 3 und 4 links dargestellte Messtaster 5 sein Werkstück 3 kontaktiert (bzw. allgemein der letzte Messtaster 5 sein Werkstück 3 kontaktiert), wird die Verfahrbewegung beendet.

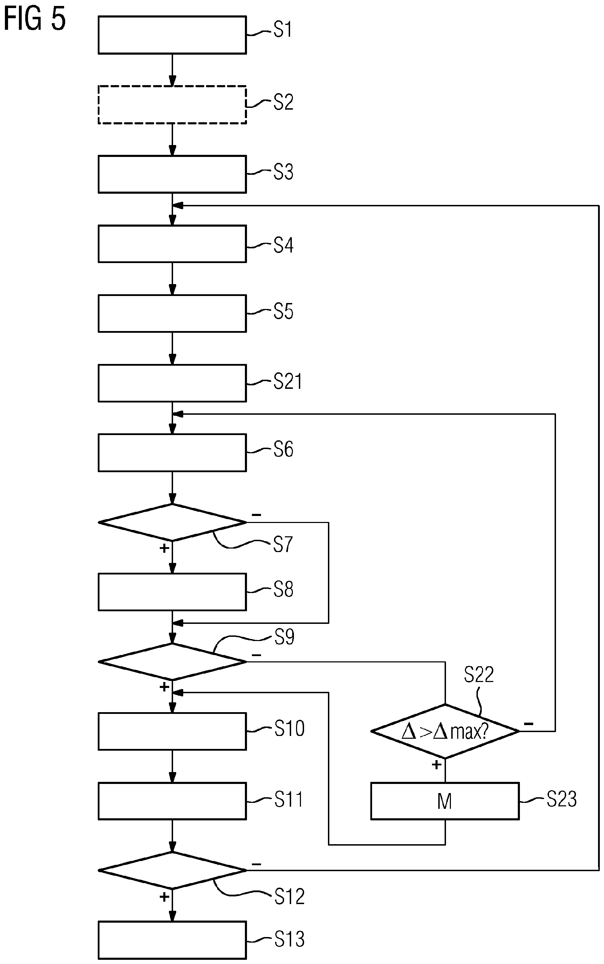

FIG 5 zeigt die eigentliche Erfindung. Sie baut auf FIG 2 auf. Die gemeinsamen Schritte S1 bis S13 werden daher nicht nochmals erläutert. Zusätzlich umfasst FIG 5 jedoch zumindest Schritte S21 und S22. Im Schritt S21 ermittelt die Steuereinrichtung 6 für jeden Messtaster 5, der sein Werkstück 3 bereits kontaktiert hat, dessen aktuelle Auslenkung Δ. Im Schritt S22 prüft die Steuereinrichtung 6 für jeden Messtaster 5, der sein Werkstück 3 bereits kontaktiert hat, ob dessen aktuelle Auslenkung Δ eine jeweilige Maximalauslenkung Δmax erreicht bzw. überschreitet. Sobald dies der Fall ist, geht die Steuereinrichtung 6 auch dann zum Schritt S10 über, wenn noch nicht alle Messtaster 5 ihr jeweiliges Werkstück 3 kontaktiert haben bzw. den Kontakt zum jeweiligen Werkstück 3 verloren haben.

Die erfindungsgemäße Ausgestaltung besteht also darin, dass die Abbruchbedingung zum Beenden der jeweiligen Verfahrbewegung nicht nur dann erfüllt ist, wenn im Rahmen der jeweiligen Verfahrbewegung für alle Messtaster 5 jeweils eine Lage erfasst wurde. Vielmehr ist die Abbruchbedingung für die jeweilige Verfahrbewegung auch dann erfüllt, wenn während der jeweiligen Verfahrbewegung die Auslenkung Δ mindestens eines der Messtaster 5 dessen jeweilige Maximalauslenkung Δmax erreicht.

Oftmals ist zusätzlich auch ein Schritt S23 vorhanden. Im Schritt S23 veranlasst die Steuereinrichtung 6, dass eine Meldung M an die Bedienperson 10 ausgegeben wird. Die Meldung M kann nach Bedarf sofort oder später - beispielsweise im Rahmen der Auswertung des Schrittes S13 - an die Bedienperson 10 ausgegeben werden.

Der Schritt S21 kann weiterhin dahingehend modifiziert werden, dass nur für denjenigen Messtaster 5, dessen Lage während der jeweiligen Verfahrbewegung zuerst erfasst wird, der also zuerst sein Werkstück 3 berührt, die Auslenkung Δ erfasst und mit der jeweiligen Maximalauslenkung Δmax verglichen wird.

Die vorliegende Erfindung weist viele Vorteile auf. Insbesondere ist auf effiziente und schnelle Weise ein Vermessen mehrerer Werkstücke 3 möglich. Eine Gefahr von Beschädigungen der Werkzeugmaschine oder der Werkstücke 3 ist ausgeschlossen. Weiterhin ergibt sich eine einfache Programmierung.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Werkzeugmaschine, bei der in mehreren Werkstückaufnahmen (1) der Werkzeugmaschine jeweils ein Werkstück (3) angeordnet ist und in mehreren Spindeln (4) der Werkzeugmaschine jeweils ein Messtaster (5) angeordnet ist,
- wobei die Spindeln (4) relativ zu den Werkstücken (3) wiederholt in einer jeweiligen gemeinsamen und gleichartigen Verfahrbewegung gemeinsam und gleichartig verfahren werden, bis eine jeweilige Abbruchbedingung für die jeweilige Verfahrbewegung erreicht ist,
- wobei während der jeweiligen gemeinsamen und gleichartigen Verfahrbewegung für die Messtaster (5) jeweils eine Lage des jeweiligen Messtasters (5) relativ zum jeweiligen Werkstück (3) erfasst wird, bei der der jeweilige Messtaster (5) das jeweilige Werkstück (3) berührt, so dass anhand der für das jeweilige Werkstück (3) erfassten Lagen des jeweiligen Messtasters (5) geometrische Aussagen über das jeweilige Werkstück (3) ableitbar sind,
**dadurch gekennzeichnet ,**
- **dass** die Messtaster (5) während der jeweiligen gemeinsamen und gleichartigen Verfahrbewegung relativ zu ihrer jeweiligen Spindel (4) in einer Ruhelage gehalten werden, wenn und solange der jeweilige Messtaster (5) das jeweilige Werkstück (3) noch nicht berührt, und ab dem Berühren des jeweiligen Werkstücks (3) eine jeweilige Auslenkung (Δ) des jeweiligen Messtasters (5) aus einer jeweiligen Ruhelage erfasst wird und
- **dass** die Abbruchbedingung erfüllt ist, sobald während der jeweiligen gemeinsamen und gleichartigen Verfahrbewegung die Auslenkung (Δ) mindestens eines der Messtaster (5) eine jeweilige Maximalauslenkung (Amax) erreicht.

2. Betriebsverfahren nach Anspruch 1,
**dadurch gekennzeichnet ,**
**dass** die Abbruchbedingung erfüllt ist, sobald während der jeweiligen gemeinsamen und gleichartigen Verfahrbewegung für alle Messtaster (5) jeweils eine Lage erfasst wurde.

3. Betriebsverfahren nach Anspruch 1 oder 2,
**dadurch gekennzeichnet ,**
**dass** immer dann, wenn während der jeweiligen gemeinsamen und gleichartigen Verfahrbewegung die Auslenkung (Δ) mindestens eines der Messtaster (5) eine jeweilige Maximalauslenkung (Amax) erreicht, eine Meldung (M) an eine Bedienperson (10) der Werkzeugmaschine ausgegeben wird.

4. Betriebsverfahren nach Anspruch 1, 2 oder 3,
**dadurch gekennzeichnet,**
**dass** nur die Auslenkung (Δ) desjenigen Messtasters (5), dessen Lage während der jeweiligen gemeinsamen und gleichartigen Verfahrbewegung zuerst erfasst wird, mit der jeweiligen Maximalauslenkung (Δmax) verglichen wird.

5. Computerprogramm, das Maschinencode (8) umfasst, der von einer Steuereinrichtung (6) für eine Werkzeugmaschine abarbeitbar ist, wobei die Abarbeitung des Maschinencodes (8) durch die Steuereinrichtung (6) bewirkt, dass die Steuereinrichtung (6) die Werkzeugmaschine gemäß einem Betriebsverfahren nach einem der obigen Ansprüche steuert.

6. Steuereinrichtung für eine Werkzeugmaschine, wobei die Steuereinrichtung mit einem Computerprogramm (7) nach Anspruch 5 programmiert ist, so dass die Steuereinrichtung die Werkzeugmaschine gemäß einem Betriebsverfahren nach einem der obigen Ansprüche steuert.

7. Werkzeugmaschine,
- wobei die Werkzeugmaschine mehrere Werkstückaufnahmen (1) zur Aufnahme je eines Werkstücks (3) aufweist,
- wobei die Werkzeugmaschine mehrere Spindeln (4) zur Aufnahme je eines Messtasters (5) aufweist,
- wobei die Werkzeugmaschine eine Steuereinrichtung (6) nach Anspruch 6 aufweist.

## Claims

1. Operating method for a machine tool, in which one workpiece (3) is arranged in each of a plurality of workpiece holders (1) of the machine tool, and one measuring sensor (5) is arranged in each of a plurality of spindles (4) of the machine tool,
- wherein the spindles (4) are repeatedly moved in a common and similar manner relative to the workpieces (3) in a respective common and similar traversing movement, until a respective cancel condition for the respective traversing movement is achieved,
- wherein, during the respective common and similar traversing movement, for each of the measuring sensors (5), a position of the respective measuring sensor (5) relative to the respective workpiece (3) is captured, at which the respective measuring sensor (5) touches the respective workpiece (3), so that, on the basis of the positions of the respective measuring sensor (5) captured for the respective workpiece (3), it is possible to derive geometric statements regarding the respective workpiece (3),
**characterised in that**
- during the respective common and similar traversing movement relative to their respective spindle (4), the measuring sensors (5) are kept in a rest position, if and for as long as the respective measuring sensor (5) is not yet touching the respective workpiece (3), and after touching the respective workpiece (3), a respective deflection (Δ) of the respective measuring sensor (5) from a respective rest position is captured, and
- the cancel condition is met as soon as the deflection (Δ) of at least one of the measuring sensors (5) achieves a respective maximum deflection (Δmax) during the respective common and similar traversing movement.

2. Operating method according to claim 1,
**characterised in that**
the cancel condition is met as soon as a position has been captured for all measuring sensors (5) in each case during the respective common and similar traversing movement.

3. Operating method according to claim 1 or 2,
**characterised in that**
whenever the deflection (Δ) of at least one of the measuring sensors (5) achieves a respective maximum deflection (Δmax) during the respective common and similar traversing movement, a message (M) is output to an operator (10) of the machine tool.

4. Operating method according to claim 1, 2 or 3,
**characterised in that**
it is only the deflection (Δ) of the measuring sensor (5) whose position is captured first during the respective common and similar traversing movement which is compared with the respective maximum deflection (Δmax).

5. Computer program comprising machine code (8) which can be executed by a control facility (6) for a machine tool, wherein the execution of the machine code (8) by the control facility (6) causes the control facility (6) to control the machine tool in accordance with an operating method according to one of the above claims.

6. Control facility for a machine tool, wherein the control facility is programmed with a computer program (7) according to claim 5, so that the control facility controls the machine tool in accordance with an operating method according to one of the above claims.

7. Machine tool,
- wherein the machine tool has a plurality of workpiece holders (1) for holding one workpiece (3) in each case,
- wherein the machine tool has a plurality of spindles (4) for holding one measuring sensor (5) in each case,
- wherein the machine tool has a control facility (6) according to claim 6.

## Revendications

1. Procédé pour faire fonctionner une machine-outil, dans laquelle respectivement une pièce (3) est disposée dans plusieurs logements (1) de pièce de la machine-outil et respectivement un palpeur (5) de mesure est monté sur plusieurs broches (4) de la machine-outil,
- dans lequel on déplace conjointement et de la même façon les broches (4) par rapport aux pièces (3) de manière répétée dans un mouvement de déplacement respectif conjoint et de même type, jusqu'à ce qu'une condition respective d'arrêt du mouvement de déplacement respectif soit atteinte,
- dans lequel pendant le mouvement de déplacement respectif conjoint et de même type du palpeur (5) de mesure, on relève respectivement une position respective du palpeur (5) de mesure par rapport à la pièce (3) respective, dans laquelle le palpeur (5) respectif de mesure touche la pièce (3) respective, de manière à pouvoir déduire, à l'aide des positions relevées pour la pièce (3) respective, du palpeur (5) de mesure respectif des prédictions géométriques sur la pièce (3) respective,
**caractérisé**
- **en ce que** l'on maintient en une position de repos le palpeur (5) de mesure pendant le mouvement de déplacement respectif conjoint et de même type par rapport à sa broche (4) respective, si et tant que le palpeur (5) respectif de mesure n'a pas encore touché la pièce (3) respective et, à partir du touché de la pièce (3) respective, on relève une déviation (Δ) respective du palpeur (5) de mesure respectif d'une position respective de repos et
- **en ce que** la condition d'arrêt est satisfaite dès que, pendant le mouvement de déplacement respectif conjoint et de même type, la déviation (Δ) d'au moins l'un des palpeurs (5) de mesure atteint une déviation (Δmax) maximum respective.

2. Procédé suivant la revendication 1,
**caractérisé**
**en ce que** la condition d'arrêt est satisfaite dès que, pendant le mouvement de déplacement respectif conjoint et de même type, on a relevé respectivement une position pour tous les palpeurs (5) de mesure.

3. Procédé suivant la revendication 1 ou 2,
caractérisé,
toujours lorsque, pendant le mouvement de déplacement respectif conjoint et de même type, la déviation (Δ) d'au moins l'un des palpeurs (5) de de mesure atteint une déviation (Δmax) maximum respective, on envoie un message (M) à un opérateur (10) de la machine-outil.

4. Procédé suivant la revendication 1, 2 ou 3,
**caractérisé**
**en ce que** l'on ne compare, à la déviation (Δmax) maximum respective, que la déviation (Δ) du palpeur (5) de mesure, dont on a relevé en premier la position pendant le mouvement respectif conjoint et de même type.

5. Programme d'ordinateur, qui comprend un code machine (8), qui peut être élaboré par un dispositif (6) de commande d'une machine-outil, dans lequel l'élaboration du code machine (8) par le dispositif (6) de commande, fait que le dispositif (6) de commande commande la machine-outil selon un procédé de fonctionnement suivant l'une des revendications précédentes.

6. Dispositif de commande d'une machine-outil, le dispositif de commande étant programmé par un programme (7) d'ordinateur suivant la revendication 5, de sorte que le dispositif de commande commande la machine-outil selon un procédé de fonctionnement suivant l'une des revendications précédentes.

7. Machine-outil,
- dans laquelle la machine-outil a plusieurs logements (1) de pièces pour la réception respectivement d'une pièce (3),
- dans laquelle la machine-outil a plusieurs broches (4) de réception chacune d'un palpeur (5) de mesure,
- dans laquelle la machine-outil a un dispositif (6) de commande suivant la revendication 6.
